# EUROPEAN PATENT APPLICATION

(11) **EP 4 797 331 A1**
(43) Date of publication of application: **26.08.2026**
(21) Application number: 26155740.9
(22) Date of filing: 02.02.2026
(51) Int. Cl.: H01M 4/02, H01M 4/70, H01M 10/04, H01M 10/0587, H01M 50/538, H01M 50/107

(54) **CYLINDRICAL BATTERY, METHOD OF MANUFACTURING THE SAME AND ELECTRIC OR HYBRID VEHICLE**

(30) Priority: 24.02.2025 KR 20250023785
(71) Applicant: SAMSUNG SDI CO., LTD., Yongin-si, Gyeonggi-do 17084 (KR)
(72) Inventor: Lee, Dong Myung, 17084 Yongin-si, Gyeonggi-do (KR); Duseon, Park, 17084 Yongin-si, Gyeonggi-do (KR); Kang, Suhyeon, 17084 Yongin-si, Gyeonggi-do (KR); Duckhyun, Kim, 17084 Yongin-si, Gyeonggi-do (KR); Woonsuk, Jang, 17084 Yongin-si, Gyeonggi-do (KR)
(74) Representative: Meissner Bolte Partnerschaft mbB

(57) **Abstract**

A secondary battery includes an electrode assembly including a first electrode plate, a separator, and a second electrode plate wound together. The first electrode plate of the electrode assembly includes a long uncoated portion and a short uncoated portion having different lengths in a width direction of the first electrode plate. Each of the long uncoated portion and the short uncoated portion of the first electrode plate has a plurality of cut pieces cut in the width direction. Furthermore, a method of manufacturing a secondary battery is comprised.

## Description

### BACKGROUND

### 1. Field

The present invention relates to a cylindrical battery, a method of manufacturing the same and an electric or hybrid vehicle.

### 2. Description of the Related Art

Secondary batteries are batteries that are designed to be recharged, unlike primary batteries that are not designed to be recharged. Generally, a secondary battery includes an electrode assembly that is composed of (or includes) a positive electrode plate, a separator, and a negative electrode plate, a case (or can) that accommodates the electrode assembly, an electrode tab extending from an uncoated portion of each of the electrode plates of the electrode assembly, external terminals respectively connected to the electrode tabs, etc.

Recently, as the adoption of cylindrical cells for use in automobiles has increased, the size of the cylindrical cell has increased, and thus, the cylindrical cell is being manufactured as a large-diameter cell. At the same time, the cylindrical cell is being manufactured with a structure in which space occupancy structures (e.g., beading portions, electrode tabs, etc.) are eliminated to increase capacity and energy density.

The above information disclosed in this background section is for enhancement of understanding of the background of the present invention, and therefore, it may contain information that does not constitute related (or prior) art.

### SUMMARY OF THE INVENTION

The present invention provides a cylindrical secondary battery having a structure exhibiting increased energy capacity, a method of manufacturing the same and an electric or hybrid vehicle.

The present invention concerns a secondary battery includes an electrode assembly including a first electrode plate, a separator, and a second electrode plate wound together and a case accommodating the electrode assembly. The first electrode plate of the electrode assembly includes a long uncoated portion and a short uncoated portion having different lengths in a width direction of the first electrode plate. Each of the long uncoated portion and the short uncoated portion of the first electrode plate has a plurality of cut pieces cut in the width direction.

In one embodiment the second electrode plate of the electrode assembly includes a long uncoated portion and a short uncoated portion having different lengths in a width direction of the second electrode plate, and each of the long uncoated portion and the short uncoated portion of the second electrode plate has a plurality of cut pieces cut in the width direction.

In one embodiment the long uncoated portion and the short uncoated portion of the first electrode plate are bent in different directions with respect to each other, and the long uncoated portion and the short uncoated portion of the second electrode plate are bent in different directions with respect to each other.

In one embodiment the long uncoated portion is bent in a direction opposite to a winding central portion of the electrode assembly and the short uncoated portion of the first electrode plate is bent toward the winding central portion, and the long uncoated portion is bent in a direction opposite to a winding central portion of the electrode assembly and the short uncoated portion of the second electrode plate is bent toward the winding central portion.

In one embodiment the long uncoated portion of the first electrode plate is nearer to a winding central portion of the electrode assembly than the short uncoated portion of the first electrode plate is, and the long uncoated portion of the second electrode plate is located closer to the winding central portion of the electrode assembly than the short uncoated portion of the second electrode plate is.

In one embodiment the short uncoated portion of the first electrode plate extends along 50% or less of a total length of the first electrode plate, and the short uncoated portion of the second electrode plate extends along 50% or less of a total length of the second electrode plate.

In one embodiment the first electrode plate further comprises a non-uncoated portion region, and the second electrode plate further comprises a non-uncoated portion region.

In one embodiment a length of the short uncoated portion of the first electrode plate in the width direction is in a range of 70% to 90% of a length of the long uncoated portion of the first electrode plate, and a length of the short uncoated portion of the second electrode plate in the width direction is in a range of 70% to 90% of a length of the long uncoated portion of the second electrode plate.

In one embodiment the secondary battery further comprises a first current collector welded to the long uncoated portion and the short uncoated portion of the first electrode plate; and a second current collector welded to the long uncoated portion and the short uncoated portion of the second electrode plate.

According to another aspect the present invention concerns an electric vehicle or a hybrid vehicle comprising at least one secondary battery according to the present invention. The secondary battery can be part of a battery pack and/or a secondary battery module.

According to another aspect the present invention concerns a method of manufacturing a secondary battery includes manufacturing a first electrode plate, manufacturing a second electrode plate, and manufacturing an electrode assembly by winding the manufactured first electrode plate and second electrode plate together. The manufacturing of the first electrode plate includes forming a long uncoated portion and a short uncoated portion having different lengths in a width direction of the first electrode plate. The forming of the long uncoated portion and the short uncoated portion of the first electrode plate comprises forming a plurality of cut pieces cut in the width direction in each of the long uncoated portion and the short uncoated portion.

In one embodiment the manufacturing of the second electrode plate includes forming a long uncoated portion and a short uncoated portion having different lengths in a width direction of the second electrode plate, and the forming of the long uncoated portion and the short uncoated portion of the second electrode plate comprises forming a plurality of cut pieces cut in the width direction in each of the long uncoated portion and the short uncoated portion.

In one embodiment the method comprises further bending the long uncoated portion and the short uncoated portion of the first electrode plate in different directions with respect to each other; and bending the long uncoated portion and the short uncoated portion of the second electrode plate in different directions with respect to each other.

In one embodiment the forming of the long uncoated portion and the short uncoated portion of the first electrode plate comprises forming the long uncoated portion nearer to a winding central portion of the electrode assembly than the short uncoated portion is, and the forming of the long uncoated portion and the short uncoated portion of the second electrode plate comprises forming the long uncoated portion nearer to the winding central portion of the electrode assembly than the short uncoated portion is.

In one embodiment in the forming of the long uncoated portion and the short uncoated portion of the first electrode plate, a length of the short uncoated portion in the width direction of the first electrode plate is in a range of 70% to 90% of a total length of the long uncoated portion, and, in the forming of the long uncoated portion and the short uncoated portion of the second electrode plate, a length of the short uncoated portion in the width direction of the second electrode plate is in a range of 70% to 90% of a total length of the long uncoated portion.In one embodiment the method further comprises welding a first current collector to the long uncoated portion and the short uncoated portion of the first electrode plate; and welding a second current collector to the long uncoated portion and the short uncoated portion of the second electrode plate.

Another secondary battery is described, wherein the secondary battery includes an electrode assembly including a first electrode plate, a separator, and a second electrode plate wound together and a case accommodating the electrode assembly. The first electrode plate of the electrode assembly includes a long uncoated portion and a short uncoated portion having different lengths in a width direction of the first electrode plate, and the second electrode plate of the electrode assembly includes a long uncoated portion and a short uncoated portion having different lengths in a width direction of the second electrode plate.

Another secondary battery is described, wherein the secondary battery includes an electrode assembly including a first electrode plate, a separator, and a second electrode plate wound together and a case accommodating the electrode assembly. The first electrode plate of the electrode assembly includes a long uncoated portion and a short uncoated portion having different lengths in a width direction of the first electrode plate. The long uncoated portion is bent in a direction opposite to a winding central portion of the electrode assembly and the short uncoated portion of the first electrode plate is bent toward the winding central portion. The second electrode plate of the electrode assembly includes a long uncoated portion and a short uncoated portion having different lengths in a width direction of the second electrode plate, and the long uncoated portion is bent in a direction opposite to a winding central portion of the electrode assembly and the short uncoated portion of the second electrode plate is bent toward the winding central portion.

Another method of manufacturing a secondary battery is described, wherein the method includes manufacturing a first electrode plate, manufacturing a separator, manufacturing a second electrode plate, and manufacturing an electrode assembly by winding the manufactured first electrode plate, separator, and second electrode plate together. The manufacturing of the first electrode plate includes forming a long uncoated portion and a short uncoated portion having different lengths in a width direction of the first electrode plate, and the manufacturing of the second electrode plate includes forming a long uncoated portion and a short uncoated portion having different lengths in a width direction of the second electrode plate.

Aspects and features of the present invention are not limited to those described above, and other aspects and features not specifically mentioned herein will be clearly understood by those skilled in the art from the description of the present invention.

### BRIEF DESCRIPTION OF THE DRAWINGS

The following drawings attached to the present specification illustrate embodiments of the present invention and further describe aspects and features of the present invention together with the detailed description of the present invention. Thus, the present invention should not be construed as being limited to the drawings, in which:
FIG. 1 is a cross-sectional view of a cylindrical battery according to some embodiments of the present invention;
FIG. 2 is a schematic configuration diagram of a cylindrical battery according to some other embodiments of the present invention;
FIG. 3A is a configuration diagram of electrode plates applicable to an electrode assembly of the cylindrical battery illustrated in FIGS. 1 and 2;
FIG. 3B is a cross-sectional schematic diagram of an electrode assembly manufactured by winding the electrode plates shown in FIG. 3A;
FIG. 4 is a configuration diagram of electrode plates applicable to the electrode assembly of the cylindrical battery illustrated in FIGS. 1 and 2 according to another embodiment;
FIG. 5 illustrates a wound electrode plate in a state in which the electrode plates shown in FIG. 4 are wound but before bending of uncoated portions;
FIGS. 6A to 7B are diagrams of embodiments of a method of bending a long uncoated portion and a short uncoated portion;
FIG. 8 illustrates a relationship between the positions and sizes of the long uncoated portion and the short uncoated portion;
FIG. 9A is a transverse sectional view of an electrode assembly of a secondary battery according to the related art;
FIG. 9B is a transverse sectional view of an electrode assembly of a secondary battery according to the present invention;
FIG. 10 is a diagram of a secondary battery module in which the secondary batteries manufactured according to embodiments of the present invention are arranged;
FIG. 11 is a diagram of a secondary battery pack including the secondary battery module illustrated in FIG. 10; and
FIG. 12 illustrates an automobile in which the secondary battery pack illustrated in FIG. 11 is installed.

### DETAILED DESCRIPTION

Hereinafter, embodiments of the present invention will be described, in detail, with reference to the accompanying drawings. The terms or words used in the present specification and claims should not be narrowly interpreted according to their general or dictionary meanings but should be interpreted as having meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some embodiments of the present invention and do not represent all of the aspects, features, and embodiments of the present invention. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present invention relates to "one or more embodiments of the present invention." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to limit the present invention.

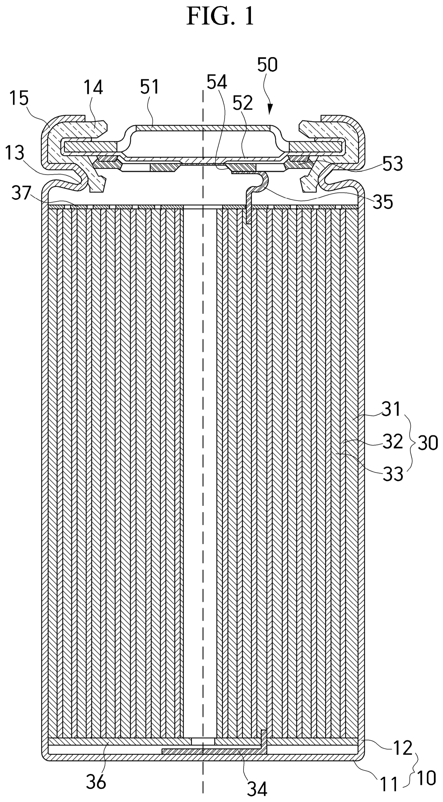

FIG. 1 is a cross-sectional view of a cylindrical battery according to some embodiments of the present invention.

Referring to FIG. 1, the secondary battery includes an electrode assembly 30, a case 10 accommodating the electrode assembly 30 and an electrolyte therein, a cap assembly 50 coupled to an opening in the case 10 to seal the case, and an insulating plate 37 positioned between the electrode assembly 30 and the cap assembly 50 inside the case 10.

The electrode assembly 30 may include a separator 32, and a first electrode plate 33 and a second electrode plate 31 positioned with the separator 32 interposed therebetween. The first electrode plate 33, the second electrode plate 31, and the separator 32 may be wound in a jelly-roll shape.

The first electrode plate 33 includes a first substrate and a first active material layer on the first substrate. A first electrode tab may extend outwardly from a first non-coated portion of the first substrate at where the first active material layer is not coated. The first electrode tab may be electrically connected to the cap assembly 50 in the form of a first lead tab 35. In some embodiments, the first non-coated portion may be directly electrically connected to a current collector. When connected to the current collector, the current collector or a lead tab extended from the current collector may be electrically connected to the cap assembly 50. The current collector may be directly connected to the cap assembly 50 or the terminal.

The second electrode plate 31 includes a second substrate and a second active material layer on the second substrate. A second electrode tab may extend outwardly from a second non-coated portion of the second substrate at where the second active material layer is not coated. The second electrode tab may be electrically connected to the case 10 in the form of a second lead tab 34. In some embodiments, the second non-coated portion may be directly electrically connected to a current collector. When connected to the current collector, the current collector or a lead tab extended from the current collector may be electrically connected to the case 10. The current collector may be directly connected to the case 10.

The first electrode plate 33 may act as a positive electrode. In such an embodiment, the first substrate may be made of, for example, an aluminum foil, and the first active material layer may include, for example, a transition metal oxide. The second electrode plate 31 may act as a negative electrode. In such an embodiment, the second substrate may be made of, for example, a copper foil or a nickel foil, and the second active material layer may include graphite, for example.

The separator 32 prevents a short circuit between the first electrode plate 33 and the second electrode plate 31 while allowing movement of lithium ions therebetween. The separator 32 may be made of, for example, a polyethylene film, a polypropylene film, a polyethylene-polypropylene film, or the like.

The case 10 accommodates the electrode assembly 30 and, together with the cap assembly 50, forms the external appearance of the secondary battery. The case 10 may have a substantially cylindrical body portion 12 and a bottom portion 11 connected to (or at) one side (e.g., one end) of the body portion 12. A beading part 13 deformed inwardly may be formed in the body portion 12, and a crimping part 15 bent inwardly may be formed at an open end of the body portion 12.

The beading part 13 can reduce or prevent movement of the electrode assembly 30 inside the case 10 and can facilitate seating of the gasket 14 and the cap assembly 50. The crimping part 15 may firmly fix the cap assembly 50 by pressing the edge of the case 10 against the gasket 14. The case 10 may be formed of steel plated with nickel, for example.

The cap assembly 50 may be fixed to the inside of the crimping part 15 by the gasket 14 to seal the case 10. The cap assembly 50 may include a cap up 51, a safety vent 52, a cap down 53, an insulating member, and a sub plate 54 but is not limited thereto and may be modified in various ways.

The cap up 51 may be positioned at the uppermost part of the cap assembly 50. The cap up 51 may include a terminal part that protrudes upwardly and is to be connected to an external circuit, and an outlet for discharging gas may be arranged around the terminal part.

The safety vent 52 may be located under the cap up 51. The safety vent 52 may include a protrusion part that protrudes convexly downwardly and is connected to the sub plate 54, and at least one notch may be formed in the safety vent 52 around the protrusion part.

When gas is generated due to overcharging or abnormal operation of the secondary battery, the protrusion part deforms upwardly due to the pressure and separates from the sub plate 54 while the safety vent 52 is cut (e.g., bursts or tears) along the notch. The opening of the safety vent 52 may prevent the battery from exploding by allowing the gas to be discharged to the outside.

The cap down 53 may be below the safety vent 52. The cap down 53 may have a first opening for exposing the protrusion part of the safety vent 52 and a second opening for gas discharge. The insulating member may be positioned between the safety vent 52 and the cap down 53 to insulate the safety vent 52 and the cap down 53.

The sub plate 54 may be under the cap down 53. The sub plate 54 may be fixed to a lower surface of the cap down 53 to block the first opening of the cap down 53, and the protrusion part of the safety vent 52 may be fixed to the sub plate 54. The first lead tab 35, which is drawn out from the electrode assembly 30, may be fixed to the sub plate 54. Accordingly, the cap up 51, the safety vent 52, the cap down 53, and the sub plate 54 may be electrically connected to the first electrode plate 33 of the electrode assembly 30.

The insulating plate 37 may be positioned to be in contact with the electrode assembly 30 below the beading part 13. The insulating plate 37 may have a tab opening through which the first lead tab 35 is drawn out. The cap assembly 50, which is electrically connected to the first electrode plate 33 by the first lead tab 35, may face the electrode assembly 30 with an insulating plate 37 interposed therebetween and may maintain an insulated state (e.g., electrically insulated) from the electrode assembly 30 due to the insulating plate 37. Another insulating plate 36 may be included for insulation between the electrode assembly 30 and the bottom portion 11 of the case 10.

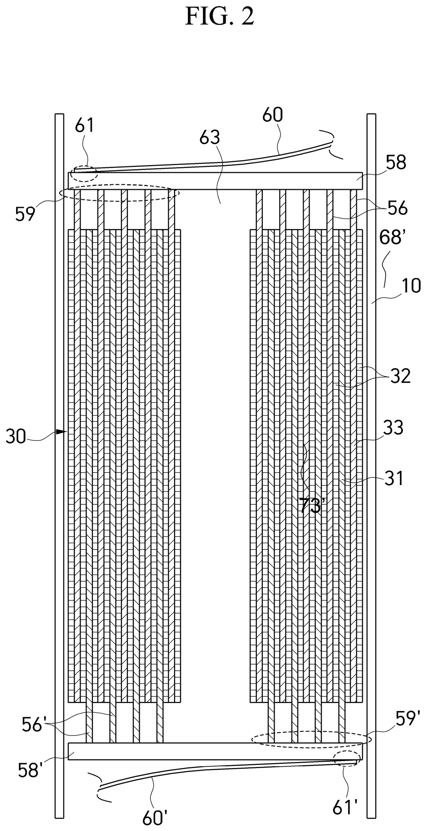

FIG. 2 is a schematic structural diagram describing a cylindrical secondary battery using an electrode tab according to some other embodiments of the present invention.

An electrode assembly 30 is accommodated inside a case 10. The electrode assembly 30 may be a jelly roll type of electrode assembly in which first electrode plates 33, separators 32, and second electrode plates 31 are wound, like that of the cylindrical battery shown in FIG. 1. Here, the first electrode plate 33 may act as a positive electrode and the second electrode plate 31 may act as a negative electrode, but the present invention is not limited thereto.

In the cylindrical battery shown in FIG. 2, the lead tab 35 illustrated in FIG. 1 is not present on (e.g., is omitted from) the first electrode plate 33, and a current collector 58 may be directly bonded to uncoated portions (e.g., electrode material uncoated portions) 56. A bonding portion between the uncoated portions 56 and the current collector 58 is indicated as a first welding portion 59. A lead tab 60 may be bonded to an upper surface of the current collector 58, and the lead tab 60 may be connected to a terminal exposed to the outside. However, in other embodiments, connection to the outside is possible without the lead tab 60. A bonding portion between the current collector 58 and the lead tab 60 is indicated as a second welding portion 61. The bonding may be performed by laser welding. Laser welding allows for welding in a non-contact manner without deformation of a thin uncoated portion.

Similarly, the lead tab 34 (see, e.g., FIG. 1) is not present on (e.g., is omitted from) the second electrode plate 31, and a current collector 58' may be directly bonded to uncoated portions (e.g., electrode material uncoated portions) 56' of the second electrode plates 31. A lead tab 60' may be bonded to a lower surface of the current collector 58', and the lead tab 60' may be connected to a terminal exposed to the outside. However, in other embodiments, connection to the outside is possible without the lead tab 60'. A bonding portion between the current collector 58' and the lead tab 60' is indicated as a second welding portion 61'. The bonding may also be performed by laser welding.

The cylindrical battery illustrated in FIG. 2 is also called a tab-less cylindrical battery because the current collector 58 is directly connected to the uncoated portions 56 of the electrode plates 33 without the lead tabs 35 and 34. The tab-less cylindrical battery is a battery platform with expanded paths (e.g., the current collectors 58 and 58') through which electrons may move. The tab-less cylindrical battery exhibits relatively low resistance (about 10 mΩ or less) performance at ultra-high output power (about 65 A or more) and is used in high output power models, and the demand for it is increasing worldwide. To replace the lead tab used in the conventional cylindrical batteries, a current collector may be used instead of the conventional lead tab, and thus, a current may be transmitted to an electrode assembly through a wide area.

Further, in the cylindrical battery illustrated in FIG. 2, the beading part 13 illustrated in FIG. 1 is omitted. For this reason, the cylindrical battery shown in FIG. 2 is also called a beading-less (or bead-less) cylindrical battery. Recently, as cylindrical cells are widely used in electric and hybrid automobiles, the size of conventional cylindrical cells is increasing. For example, the cylindrical cells are being manufactured as large-diameter cells, and cells are being manufactured with structures in which large space occupancy structures (e.g., beading portions) are eliminated to increase capacity thereof. By eliminating the beading part 13 (see, e.g., FIG. 1), the usability of an upper space of the cylindrical battery can be increased.

Materials that can be used in the cylindrical battery of the present invention will now be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li(_{3-f})Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

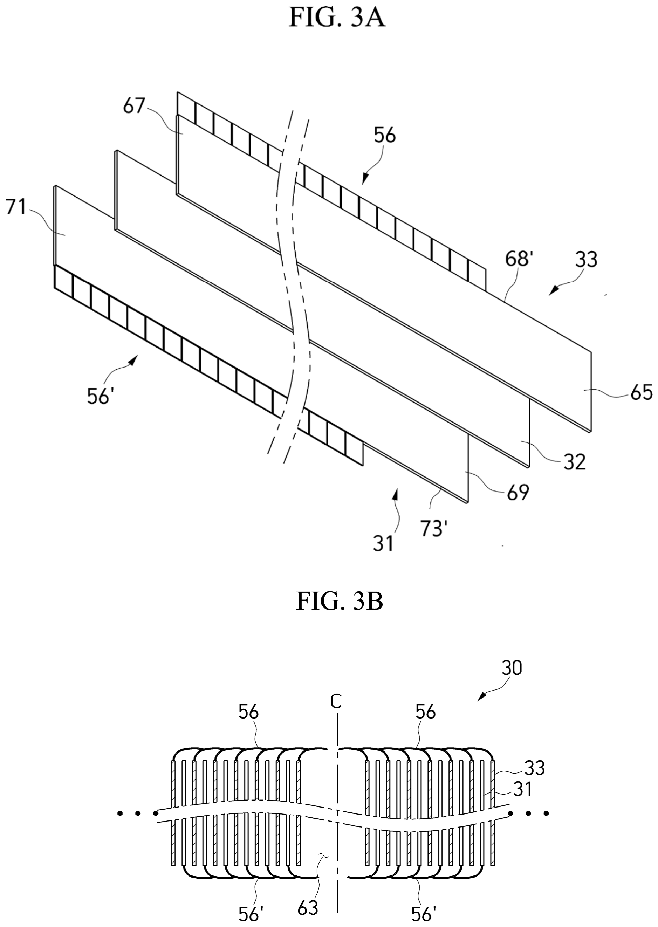

FIG. 3A is a configuration diagram of electrode plates that is applicable to the electrode assembly 30 of the cylindrical battery illustrated in FIGS. 1 and 2, and

FIG. 3B is a cross-sectional schematic diagram of an electrode assembly manufactured by winding the electrode plates shown in FIG. 3A. Hereinafter, the electrode assembly 30 is described based on the structure of FIG. 2 as an example.

Referring to FIG. 3A, a separator 32 is inserted between a first electrode plate 33 and a second electrode plate 31, which are formed to extend for winding into a cylindrical shape.

A first uncoated portion 56 is formed on one side of the first electrode plate 33 in a longitudinal direction. The first uncoated portion 56 has a plurality of cut pieces cut along a plurality of width-wise cut lines. A portion of each cut piece is connected to a substrate of the first electrode plate 33. Further, one end (marked 65) of the first electrode plate 33 is an end portion that will be located in an inner winding central portion 63 (see, e.g., FIG. 2) after winding, and the other end (marked 67) is an end portion that will be located on the outside of the electrode assembly 30 after winding. Hereinafter, the inner end portion 65 will be referred to as a first end 65, and the outer end portion 67 will be referred to as a second end 67.

Similar to the first electrode plate 33, a second uncoated portion 56' is formed on one side of the second electrode plate 31 in a longitudinal direction (e.g., at an opposite side to the first uncoated portion 56 of the first electrode plate 33). The second uncoated portion 56' has a plurality of cut pieces cut along a plurality of width-wise cut lines. A portion of each cut piece is connected to a substrate of the second electrode plate 31. Further, one end (marked 69) of the second electrode plate 31 is an end portion that will be located in an inner winding central portion 63 (see, e.g., FIG. 2) after winding, and the other end (marked 71) is an end portion that will be located on the outside of the electrode assembly 30 after winding. Hereinafter, the inner end portion 69 will be referred to as a first end 69 and the outer end portion 71 will be referred to as a second end 71.

The first electrode plate 33, the second electrode plate 31, and the separator 32 manufactured as illustrated in FIG. 3A may be wound to produce a wound-type electrode assembly 30 as illustrated in the cross-sectional view of FIG. 3B. In FIG. 3B, the separator 32 is not illustrated for convenience of understanding. To weld the current collector 58 illustrated in FIG. 2 to the first uncoated portion 56 of the first electrode plate 33, the plurality of cut pieces forming the first uncoated portion 56 may be bent symmetrically toward a central axis C of the winding central portion 63. Similarly, to weld the second uncoated portion 56' of the second electrode plate 31 illustrated in FIG. 2 to the current collector 58', the plurality of cut pieces forming the second uncoated portion 56' may be bent symmetrically toward the central axis C of the winding central portion 63.

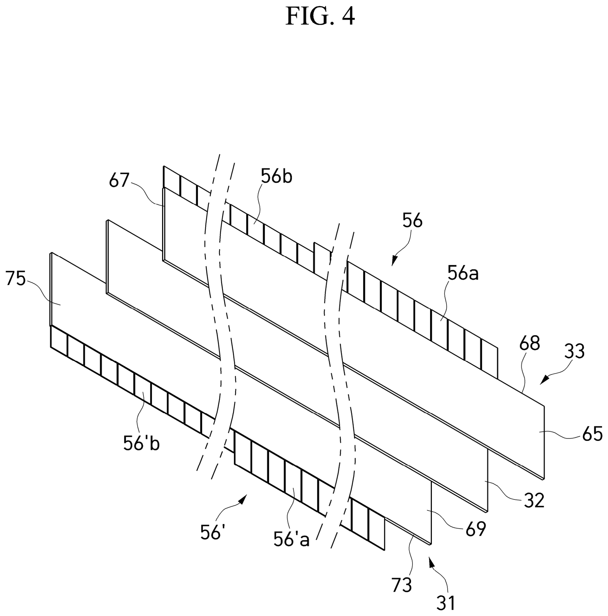

FIG. 4 is a configuration diagram of another embodiment of electrode plates that is applicable to the electrode assembly 30 of the cylindrical battery illustrated in FIGS. 1 and 2, and FIG. 5 illustrates a wound electrode plate in a state in which the electrode plates shown in FIG. 4 is wound but before the bending of uncoated portions.

In FIG. 4, a separator 32 is inserted between a first electrode plate 33 and a second electrode plate 31, which are formed to extend for winding the electrode plates for a cylindrical battery.

A first uncoated portion 56 is formed on one side of the first electrode plate 33 in a longitudinal direction. The first uncoated portion 56 is composed of (or includes) a long uncoated portion 56a and a short uncoated portion 56b having different lengths with respect to each other in a width direction of the first electrode plate 33. Each of the long uncoated portion 56a and the short uncoated portion 56b of the first electrode plate 33 has a plurality of cut pieces cut along a plurality of width-wise cut lines. Die notching or laser notching may be used to form the cut pieces.

A portion of each cut piece is connected to a substrate of the first electrode plate 33. The long uncoated portion 56a is located close to (e.g., nearer to) a first end 65 of the first electrode plate 33, and the short uncoated portion 56b is located close to (e.g., nearer to) a second end 67. Here, as described above with respect to the first end 65 and the second end 67, an end portion that is located on a winding central portion 63 after winding the first electrode plate 33 is the first end 65, and an end portion that is located on the outside after winding is the second end 67.

The long uncoated portion 56a is formed at a distance (e.g., at a certain distance) from the first end 65. That is, a non-uncoated portion 68 having no uncoated portion 56 (e.g., a portion of the first electrode plate 33 lacking any uncoated portion 56) is located between a start portion of the long uncoated portion 56a and the first end 65. According to embodiments of the present invention, a length of the non-uncoated portion 68 in a longitudinal direction illustrated in FIG. 4 may be shorter than that of a non-uncoated portion 68' of the electrode plate 33 illustrated in FIG. 3A. By designing the non-uncoated portion 68 to be relatively shorter, more electrode tabs, that is, a long uncoated portion 56a, may be provided for the same electrode plate length and winding center size, thereby reducing the internal resistance of the electrode assembly.

Referring again to FIG. 4, similar to the first electrode plate 33, a second uncoated portion 56' is formed on one side of two sides of the second electrode plate 31 in a longitudinal direction that is an opposite side to the first uncoated portion 56 of the first electrode plate 33. The second uncoated portion 56' is composed of (or includes) a long uncoated portion 56'a and a short uncoated portion 56'b that are formed to have different lengths with respect to each other in a width direction of the second electrode plate 31. Each of the long uncoated portion 56'a and the short uncoated portion 56'b of the second electrode plate 31 has a plurality of cut pieces cut along a plurality of width-wise cut lines. A portion of each cut piece is connected to a substrate of the second electrode plate 31. The long uncoated portion 56'a is located close to a first end 69 of the second electrode plate 31 and the short uncoated portion 56'b is located close to a second end 71. Here, as described above with respect to the first end 69 and the second end 71 of the second electrode plate 31, an end portion that is located on the winding central portion 63 after winding the second electrode plate 31 is the first end 69, and an end portion that is located on the outside after winding is the second end 71.

In the case of the second electrode plate 31, the long uncoated portion 56'a also is formed at a distance (e.g., at a certain distance) from the first end 69. That is, a non-uncoated portion 73 having no uncoated portion 56' is located between a start portion of the long uncoated portion 56'a and the first end 69. According to embodiments of the present invention, a length of the non-uncoated portion 73 in a longitudinal direction illustrated in FIG. 4 may be shorter than that of a non-uncoated portion 73' of the electrode plate 31 illustrated in FIG. 3A. By designing the non-uncoated portion 73 to be relatively short, more electrode tabs, that is, a long uncoated portion 56'a, may be provided for the same electrode plate length and winding center size, thereby reducing the internal resistance of the electrode assembly.

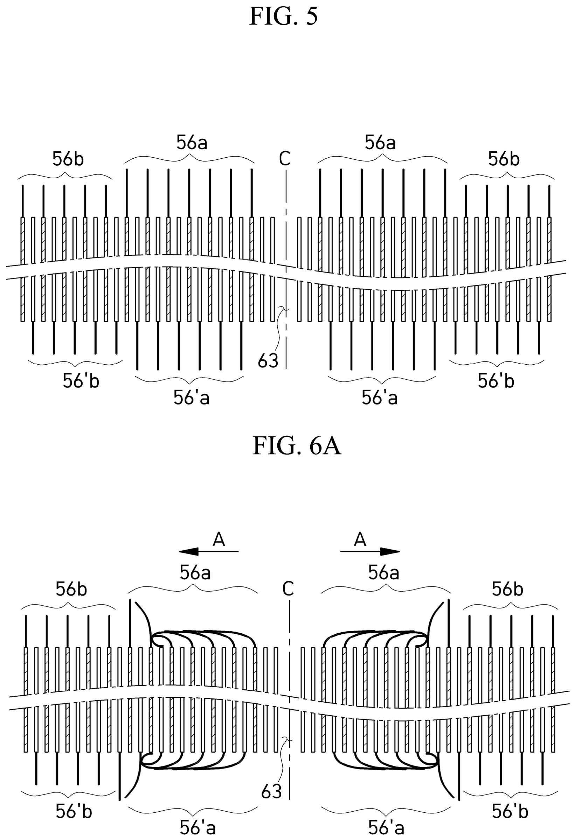

The first electrode plate 33 and the second electrode plate 31, which are manufactured as illustrated in FIG. 4, and a separator 32 may be wound to produce a wound-type electrode assembly 30 as illustrated in the cross-sectional view of FIG. 5. In FIG. 5, the separator 32 is not illustrated for convenience of understanding. FIG. 5 illustrates the electrode assembly before the long uncoated portion 56a and the short uncoated portion 56b of the first electrode plate 33 and the long uncoated portion 56'a and the short uncoated portion 56'b of the second electrode plate 31 are bent. In a subsequent process, a plurality of cut pieces of the long uncoated portion 56a and the short uncoated portion 56b which constitute (or form) the first uncoated portion 56 of the first electrode plate 33 may be bent. The first current collector 58 illustrated in FIG. 2 may be welded to the bent long uncoated portion 56a and short uncoated portion 56b. Similarly, a plurality of cut pieces of the long uncoated portion 56'a and the short uncoated portion 56'b which constitute the second uncoated portion 56' of the second electrode plate 31 may be bent. The second current collector 58' illustrated in FIG. 2 may be welded to the bent long uncoated portion 56'a and short uncoated portion 56'b.

In FIGS. 4 and 5 and the related descriptions, the long uncoated portion 56a and the short uncoated portion 56b are illustrated as being formed on the first electrode plate 33 and the long uncoated portion 56'a and the short uncoated portion 56'b are illustrated as being formed on the second electrode plate 31, but the present invention is not limited thereto. According to other embodiments of the present invention, the long uncoated portion 56a and the short uncoated portion 56b may be formed only on the first electrode plate 33, and the long uncoated portion 56'a and the short uncoated portion 56'b may be formed only on the second electrode plate 31.

Examples of a method of bending the long uncoated portion 56a and the short uncoated portion 56b will be described with reference to FIGS. 6A to 7B.

Referring to FIG. 6A first, the long uncoated portion 56a and the short uncoated portion 56b of the first electrode plate 33 are bent in different directions. Further, the long uncoated portion 56'a and the short uncoated portion 56'b of the second electrode plate 31 are bent in in different directions.

According to some embodiments, the long uncoated portion 56a of the first electrode plate 33 may be bent in a direction opposite to the winding central portion 63, and the short uncoated portion 56b may be bent toward the winding central portion 63. Similarly, the long uncoated portion 56'a of the second electrode plate 31 may be bent in the direction opposite to the winding central portion 63, and the short uncoated portion 56'b may be bent toward the winding central portion 63.

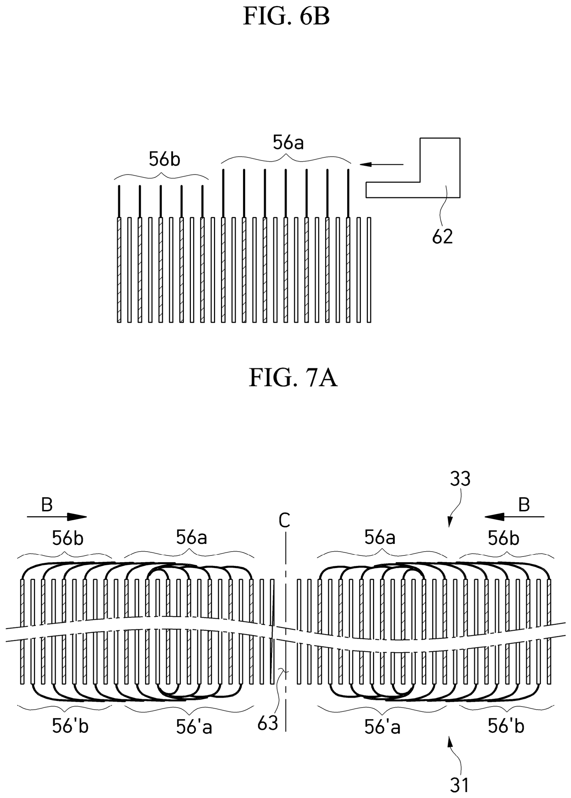

According to some embodiments, to bend the long uncoated portion 56a and the short uncoated portion 56b of the first electrode plate 33 and/or the long uncoated portion 56'a and the short uncoated portion 56'b of the second electrode plate 31, the long uncoated portion 56a of the first electrode plate 33 and/or the long uncoated portion 56'a of the second electrode plate 31 may be first bent in direction A (e.g., in a direction opposite to a longitudinal axis C of the winding central portion 63), as illustrated in FIG. 6A. To bend the long uncoated portion 56a and/or 56'a in the direction A, a long uncoated portion bending jig 62 may be used as illustrated in FIG. 6B. By pushing the long uncoated portion bending jig 62 in the direction of the arrow, the long uncoated portion 56a of the first electrode plate 33 and/or the long uncoated portion 56'a of the second electrode plate 31 may be bent in the direction opposite to the winding central portion 63.

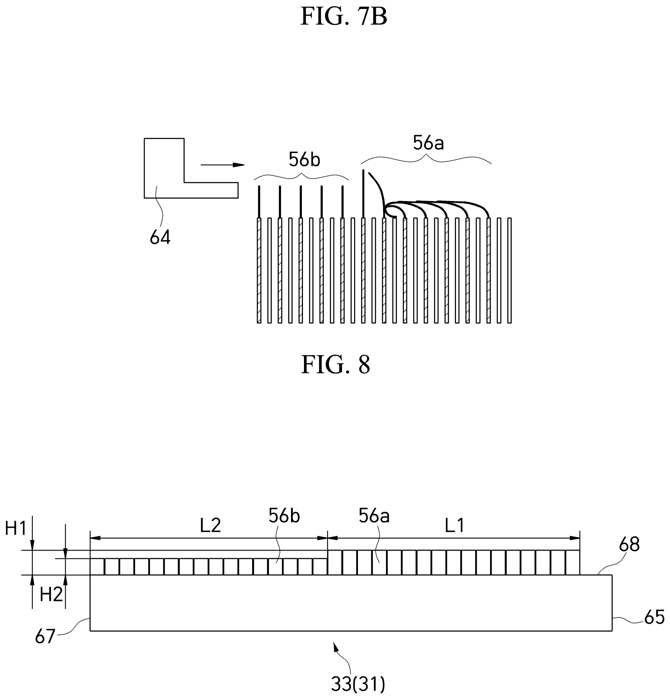

Next, as illustrated in FIG. 7A, the short uncoated portion 56b of the first electrode plate 33 and/or the short uncoated portion 56'b of the second electrode plate 31 may be bent in direction B (e.g., toward the longitudinal axis C of the winding central portion 63). To bend the short uncoated portions 56b and/or 56'b in the direction B, the short uncoated portion bending jig 64 may be used as illustrated in FIG. 7B. By pushing the short uncoated portion bending jig 64 in the direction of the arrow, the short uncoated portion 56b of the first electrode plate 33 and/or the short uncoated portion 56'b of the second electrode plate 31 may be bent toward the winding central portion 63. In other embodiments, conversely, the long uncoated portion 56a of the first electrode plate 33 may be bent toward the winding central portion 63, and the short uncoated portion 56b may be bent in the direction opposite to the winding central portion 63. Similarly, the long uncoated portion 56'a of the second electrode plate 31 may be bent toward the winding central portion 63, and the short uncoated portion 56'b may be bent in the direction opposite to the winding central portion 63.

As a result of bending the uncoated portions having different lengths in different directions (see, e.g., FIG. 7A), compared to a result of bending the uncoated portions having a constant length in a constant direction (see, e.g., FIG. 3B), the degree of disorder in the bending portion of the uncoated portions may increase as the uncoated portions having different lengths are bent in different directions, so that the contact between the uncoated portions may increase, a firm compaction effect between the uncoated portions may be obtained, the welding quality may be improved when welding the current collector 58 and 58' (see, e.g., FIG. 2), and improved current density and increased current capacity may be obtained.

A relationship between the positions and sizes of the long uncoated portions 56a and 56'a and the short uncoated portions 56b and 56'b that are formed on the first electrode plate 33 and the second electrode plate 31 is illustrated in FIG. 8. In FIG. 8, only the long uncoated portion 56a and the short uncoated portion 56b of the first electrode plate 33 are illustrated for convenience.

First, the short uncoated portion 56b and the long uncoated portion 56a may be divided at a point of approximately 50% of the length of the electrode plate 33 or 31. For example, referring to FIG. 8, the long uncoated portion 56a may be formed up to a point of approximately 50% of the length from the first end 65 to the second end 67 of the electrode plate 33 or 31, and the short uncoated portion 56b may be formed thereafter. A length L1 of the long uncoated portion 56a in a longitudinal direction may occupy the entire 50% section (e.g., the entire half), but the present invention is not limited thereto. For example, the long uncoated portion 56a may be formed in a region excluding the previously mentioned non-uncoated portion 68. Further, a length L2 of the short uncoated portion 56b in a longitudinal direction may be formed entirely in a corresponding 50% section (e.g., the entire half), but the present invention is not limited thereto. Because the electrode assembly is manufactured by rolling the electrode plates, a starting point of the long uncoated portion 56a may be located away from the winding central portion 63, and the position of an end point of the short uncoated portion 56b may also be set (or determined) depending on an outer circumferential surface of the round-rolled electrode assembly and the surrounding structures.

In FIG. 8, a height of the long uncoated portion 56a, that is, a height H1, and a height of the short uncoated portion 56b, that is, a height H2, may have a relationship of approximately "H1:H2=100:(70~90)." That is, the height H2 may be approximately 70% to 90% of the height H1. In some embodiments, the long uncoated portion 56a may be formed to have a width in a range of approximately 7 mm to 8 mm, and the short uncoated portion 56b may be formed to have a width in a range of approximately 5 mm to 7 mm.

A method of manufacturing the above-described secondary battery will be described. A method of manufacturing a secondary battery according to some embodiments of the present invention includes manufacturing a first electrode plate 33, manufacturing a separator 32, manufacturing a second electrode plate 31, and manufacturing an electrode assembly 30 by winding the manufactured first electrode plate 33, separator 32, and second electrode plate 31. The manufacturing of the first electrode plate 33 includes forming a long uncoated portion 56a and a short uncoated portion 56b having different lengths in a width direction of the first electrode plate 33, and the manufacturing of the second electrode plate 31 includes forming a long uncoated portion 56'a and a short uncoated portion 56'b having different lengths in a width direction of the second electrode plate 31. The forming of the long uncoated portion 56a and the short uncoated portion 56b of the first electrode plate 33 includes forming a plurality of cut pieces cut in the width direction in each of the long uncoated portion 56a and the short uncoated portion 56b, and the forming of the long uncoated portion 56'a and the short uncoated portion 56'b of the second electrode plate 31 includes forming a plurality of cut pieces cut in the width direction in each of the long uncoated portion 56'a and the short uncoated portion 56'b.

The forming of the long uncoated portion 56a and the short uncoated portion 56b of the first electrode plate 33 may include forming the long uncoated portion 56a closer to (e.g., nearer to) the winding central portion 63 of the electrode assembly 30 than the short uncoated portion 56b. Similarly, the forming of the long uncoated portion 56a and the short uncoated portion 56b of the second electrode plate 33 may include forming the long uncoated portion 56a closer to (e.g., nearer to) the winding central portion 63 of the electrode assembly 30 than the short uncoated portion 56b.

Next, the long uncoated portion 56a and the short uncoated portion 56b of the first electrode plate 33 are bent in different directions, and the long uncoated portion 56'a and the short uncoated portion 56'b of the second electrode plate 31 are bent in different directions. The order of bending of the long uncoated portions 56a and 56'a and the short uncoated portions 56b and 56'b is arbitrary. For example, the long uncoated portions 56a and 56'a may be bent first and then the short uncoated portions 56b and 56'b may be bent, conversely, the short uncoated portions 56b and 56'b may be bent first and then the long uncoated portions 56a and 56'a may be bent, or the long uncoated portions 56a and 56'a and the short uncoated portions 56b and 56'b may be bent concurrently (or simultaneously).

In some embodiments, the long uncoated portion 56a of the first electrode plate 33 may be bent in the direction opposite to the winding central portion 63 of the electrode assembly 30, and the short uncoated portion 56b may be bent toward the winding central portion 63. Similarly, the long uncoated portion 56'a of the second electrode plate 31 may be bent in the direction opposite to the winding central portion 63 of the electrode assembly 30, and the short uncoated portion 56'b may be bent toward the winding central portion 63.

In other embodiments, conversely, the long uncoated portion 56a of the first electrode plate 33 may be bent toward the winding central portion 63, and the short uncoated portion 56b may be bent in the direction opposite to the winding central portion 63. Further, the long uncoated portion 56'a of the second electrode plate 31 may be bent toward the winding central portion 63, and the short uncoated portion 56'b may be bent in the direction opposite to the winding central portion 63.

Next, a first current collector 58 may be welded to the long uncoated portion 56a and the short uncoated portion 56b of the first electrode plate 33, and a second current collector 58' may be welded to the long uncoated portion 56'a and the short uncoated portion 56'b of the second electrode plate 31.

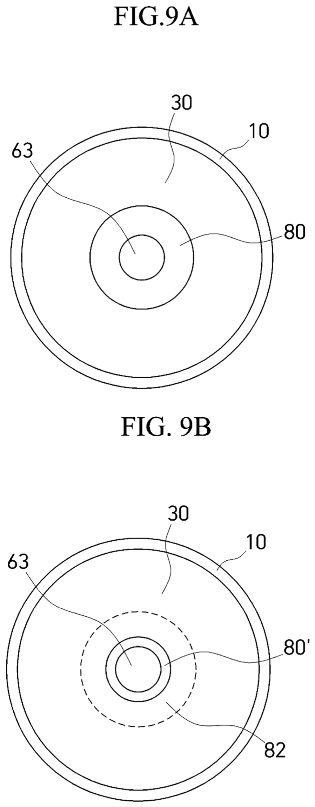

FIG. 9A is a transverse sectional view of an electrode assembly having an uncoated portion of an electrode plate in the secondary battery according to the related art is bent, and FIG. 9B is a transverse sectional view of an electrode assembly having a long uncoated portion and a short uncoated portion of an electrode plate in the secondary battery according an embodiment to the present invention are bent.

FIG. 9A illustrates a top view of an electrode assembly 30 in which the electrode plate for the conventional secondary battery illustrated in FIG. 3A is wound and illustrates a separator region 80 around a winding central portion 63 that is relatively increased (or is relatively large) due to the non-uncoated portions 68' and/or 73' illustrated in FIG. 3A. On the other hand, FIG. 9B illustrates a top view of an electrode assembly 30 in which the electrode plate illustrated in FIG. 5 is wound according to embodiments of the present invention and illustrates a separator region 80' around the winding central portion 63 that is relatively reduced (or is relatively small) due to the short non-uncoated portions 68 and/or 73 illustrated in FIG. 4.

Therefore, compared to the example shown in FIG. 9A, in the embodiment of the present invention shown in FIG. 9B, the two-stage bending of the long uncoated portion and the short uncoated portion of the electrode plate in two directions increases a current path area of a cross-sectional area of the electrode assembly 30, and the resistance of the electrode assembly 30 can be reduced, and thus, the benefit of increased energy density can be obtained.

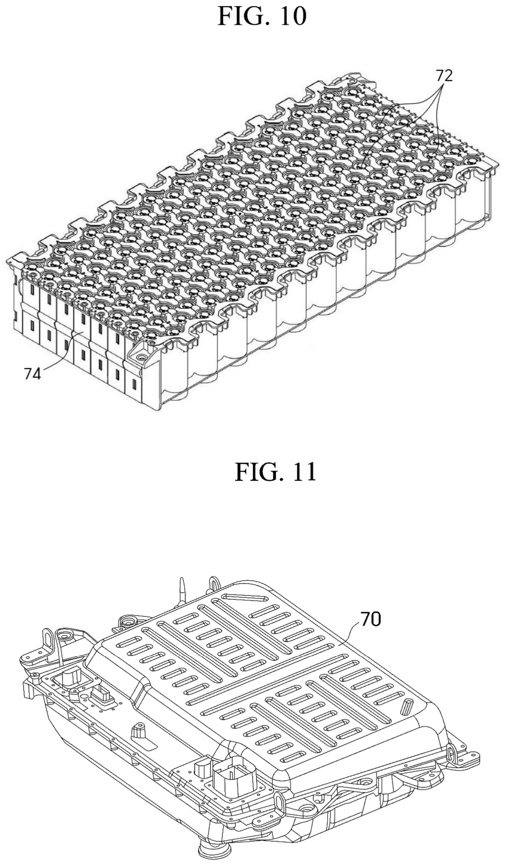

FIG. 10 is a diagram of an example of a secondary battery module in which the cylindrical secondary batteries according to embodiments of the present invention are arranged. With the increase in secondary battery capacity for driving electric vehicles or the like, a secondary battery module may be manufactured by arranging a plurality of secondary battery cells 72 transversely and/or longitudinally and connecting them together. The plurality of secondary batteries 72 may be arranged in a space defined by a certain shape of module case 74. The secondary batteries 72 may be arranged in an arrangement (direction) and number to obtain desired voltage and current specifications.

FIG. 11 is a perspective view of a battery pack 70 according to embodiments of the present invention. Referring to FIG. 11, the battery pack 70 may include an assembly to which individual batteries are electrically connected and a pack housing accommodating the same. In the drawing, for convenience of illustration, components including a bus bar, a cooling unit, external terminals for electrically connecting batteries, etc., are not shown.

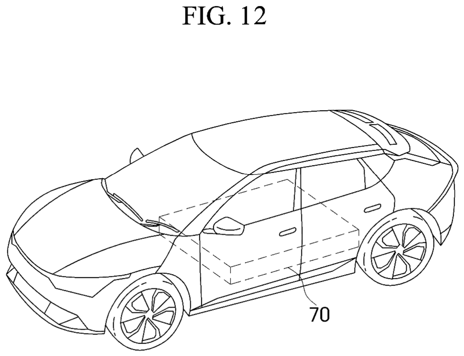

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 12 shows a vehicle that includes the battery pack 70 shown in FIG. 11 on the lower body thereof. The vehicle may operate by (e.g., may be powered by) receiving power from the battery pack 70.

The cylindrical secondary battery, according to embodiments of the present invention, increases the degree of disorder in the bending portion of the uncoated portions because the uncoated portions having different lengths are bent in different directions, which increases the contact between the uncoated portions and ensures firm compaction effect between the uncoated portions, the welding quality can be improved when the current collector is welded, and accordingly, improved current density and increased current capacity characteristics can be obtained.

Further, due to the two-stage bending of the long uncoated portion and the short uncoated portion of the electrode plate in two directions, a current path area of a cross-sectional area of the electrode assembly can increase, the resistance of the electrode assembly can be reduced, and thus, the benefit of increased energy density can be obtained. Furthermore, the effect of capacity increase can be additionally obtained by increasing or maximizing space utilization through the tab-less structure and beading-less structure.

In addition, the following embodiments are disclosed:
1. An electrode assembly comprising:
   a first electrode plate comprising a long uncoated portion and a short uncoated portion having different lengths in a width direction of the first electrode plate, each of the long uncoated portion and the short uncoated portion of the first electrode plate having a plurality of cut pieces cut in the width direction;
   a separator; and
   a second electrode plate.
2. The electrode assembly according to embodiment 1, wherein the second electrode plate comprises a long uncoated portion and a short uncoated portion having different lengths in a width direction of the second electrode plate, and
   wherein each of the long uncoated portion and the short uncoated portion of the second electrode plate has a plurality of cut pieces cut in the width direction.
3. The electrode assembly according to embodiment 2, wherein the long uncoated portion and the short uncoated portion of the first electrode plate are bent in different directions with respect to each other, and
   wherein the long uncoated portion and the short uncoated portion of the second electrode plate are bent in different directions with respect to each other.
4. The electrode assembly according to embodiment 2 or 3, wherein the long uncoated portion of the first electrode plate is nearer to a winding central portion than the short uncoated portion of the first electrode plate is, and wherein the long uncoated portion of the second electrode plate is nearer to the winding central portion than the short uncoated portion of the second electrode plate is.
5. The electrode assembly according to any of the embodiments 1 to 4, wherein the first electrode plate further comprises a non-uncoated portion region, and wherein the second electrode plate further comprises a non-uncoated portion region.

## Claims

1. A secondary battery comprising:
an electrode assembly (30) comprising a first electrode plate (33), a separator (32), and a second electrode plate (31) that are wound together; and
a case (10) accommodating the electrode assembly (30),
wherein the first electrode plate (33) of the electrode assembly (30) comprises a long uncoated portion (56a) and a short uncoated portion (56b) having different lengths in a width direction of the first electrode plate (33), and
wherein each of the long uncoated portion (56a) and the short uncoated portion (56b) of the first electrode plate (33) has a plurality of cut pieces cut in the width direction.

2. The secondary battery according to claim 1, wherein the second electrode plate (31) of the electrode assembly (30) comprises a long uncoated portion (56'a) and a short uncoated portion (56'b) having different lengths in a width direction of the second electrode plate (31), and
wherein each of the long uncoated portion (56'a) and the short uncoated portion (56'b) of the second electrode plate (31) has a plurality of cut pieces cut in the width direction.

3. The secondary battery according to claim 2, wherein the long uncoated portion (56a) and the short uncoated portion (56b) of the first electrode plate (33) are bent in different directions with respect to each other, and
wherein the long uncoated portion (56'a) and the short uncoated portion (56'b) of the second electrode plate (31) are bent in different directions with respect to each other.

4. The secondary battery according to claims 2 or 3, wherein the long uncoated portion (56a) of the first electrode plate (33) is bent in a direction opposite to a winding central portion (63) of the electrode assembly (30) and the short uncoated portion (56b) of the first electrode plate (33) is bent toward the winding central portion (63), and
wherein the long uncoated portion (56'a) of the second electrode plate (31) is bent in the direction opposite to the winding central portion (63) of the electrode assembly (30) and the short uncoated portion (56'b) of the second electrode plate (31) is bent toward the winding central portion (63).

5. The secondary battery according to any of claims 2 to 4, wherein the long uncoated portion (56a) of the first electrode plate (33) is nearer to a winding central portion (63) of the electrode assembly (30) than the short uncoated portion (56b) of the first electrode plate is (33), and
wherein the long uncoated portion (56'a) of the second electrode plate (31) is located closer to the winding central portion (63) of the electrode assembly (30) than the short uncoated portion (56b) of the second electrode plate (31) is.

6. The secondary battery according to any of claims 2 to 5, wherein the short uncoated portion (56b) of the first electrode plate (33) extends along 50% or less of a total length of the first electrode plate (33), and
wherein the short uncoated portion (56'b) of the second electrode plate (31) extends along 50% or less of a total length of the second electrode plate (31).

7. The secondary battery according to any of claims 2 to 6, wherein the first electrode plate (33) further comprises a non-uncoated portion region (68, 68'), and
wherein the second electrode plate (31) further comprises a non-uncoated portion region (73, 73').

8. The secondary battery according to any of claims 2 to 7, wherein a length of the short uncoated portion (56b) of the first electrode plate (33) in the width direction is in a range of 70% to 90% of a length of the long uncoated portion (56a) of the first electrode plate (33), and
wherein a length of the short uncoated portion (56'b) of the second electrode plate (31) in the width direction is in a range of 70% to 90% of a length of the long uncoated portion (56'a) of the second electrode plate (31).

9. The secondary battery according to any of claims 2 to 8, further comprising:
a first current collector (58) welded to the long uncoated portion (56a) and the short uncoated portion (56b) of the first electrode plate (33); and
a second current collector (58') welded to the long uncoated portion (56'a) and the short uncoated portion (56'b) of the second electrode plate (31).

10. An electric vehicle or a hybrid vehicle comprising at least one secondary battery to any of claims 1 to 9.

11. A method of manufacturing a secondary battery, the method comprising:
manufacturing a first electrode plate (33) comprising forming a long uncoated portion (56a) and a short uncoated portion (56b) having different lengths in a width direction of the first electrode plate (33);
manufacturing a second electrode plate (31); and
manufacturing an electrode assembly (30) by winding the manufactured first electrode plate (33) and second electrode plate (31),
wherein the forming of the long uncoated portion (56a) and the short uncoated portion (56b) of the first electrode plate (33) comprises forming a plurality of cut pieces cut in the width direction in each of the long uncoated portion (56a) and the short uncoated portion (56b).

12. The method according to claim 11, wherein the manufacturing of the second electrode plate (31) comprises forming a long uncoated portion (56'a) and a short uncoated portion (56'b) having different lengths in a width direction of the second electrode plate (31), and
wherein the forming of the long uncoated portion (56'a) and the short uncoated portion (56'b) of the second electrode plate (31) comprises forming a plurality of cut pieces cut in the width direction in each of the long uncoated portion (56'a) and the short uncoated portion (56'b).

13. The method according to claim 12, further comprising:
bending the long uncoated portion (56a) and the short uncoated portion (56b) of the first electrode plate (33) in different directions with respect to each other; and
bending the long uncoated portion (56'a) and the short uncoated portion (56'b) of the second electrode plate (31) in different directions with respect to each other.

14. The method according to claims 12 or 13, wherein the forming of the long uncoated portion (56a) and the short uncoated portion (56b) of the first electrode plate (33) comprises forming the long uncoated portion (56a) nearer to a winding central portion (63) of the electrode assembly (30) than the short uncoated portion (56b) is, and
wherein the forming of the long uncoated portion (56'a) and the short uncoated portion (56'b) of the second electrode plate (31) comprises forming the long uncoated portion (56'a) nearer to the winding central portion (63) of the electrode assembly (30) than the short uncoated portion (56'b) is.

15. The method according to any of claims 12 to 14, wherein, in the forming of the long uncoated portion (56a) and the short uncoated portion (56b) of the first electrode plate (33), a length of the short uncoated portion (56b) in the width direction of the first electrode plate (33) is in a range of 70% to 90% of a total length of the long uncoated portion (56a), and
wherein, in the forming of the long uncoated portion (56'a) and the short uncoated portion (56'b) of the second electrode plate (31), a length of the short uncoated portion (56'b) in the width direction of the second electrode plate (31) is in a range of 70% to 90% of a total length of the long uncoated portion (56'a).
